# EUROPÄISCHE PATENTANMELDUNG

(11) **EP 3 278 866 A1**
(43) Veröffentlichungstag der Anmeldung: **07.02.2018**
(21) Anmeldenummer: 16182983.3
(22) Anmeldetag: 05.08.2016
(51) Int. Cl.: B01D 63/08, B01D 63/10, B01D 65/02, B01D 65/08

(54) **TRENNMODUL UND VERFAHREN ZUR AUFREINIGUNG FLUIDER MEDIEN**

(71) Anmelder: Fraunhofer-Gesellschaft zur Förderung der angewandten Forschung e.V., 80686 München (DE)
(72) Erfinder: Spohn, Uwe, 06120 Halle (DE); Rühl, Marco, 06749 Bitterfeld-Wolfen (DE); Heilmann, Andreas, 09573 Augustusburg (DE)
(74) Vertreter: Pfenning, Meinig & Partner mbB

(57) **Zusammenfassung**

Die vorliegende Erfindung betrifft ein Verfahren zur Aufreinigung fluider Medien, einen Trennmodul sowie Verwendungen des Trennmoduls. Das Trennmodul umfasst dabei mindestens eine semipermeable Membran und mindestens einen Membranabstandshalter, der als mindestens eine flächige und permeable Elektrode ausgeführt ist.

## Beschreibung

Die vorliegende Erfindung betrifft ein Verfahren zur Aufreinigung fluider Medien, einen Trennmodul sowie Verwendungen des Trennmoduls. Das Trennmodul umfasst dabei mindestens eine semipermeable Membran und mindestens einen Membranabstandshalter, der als mindestens eine flächige und permeable Elektrode ausgeführt ist.

Mit Hilfe von Filtration und Umkehrosmose können fluide Medien von fein verteilten Feststoffen bzw. auch von Ionen und Molekülen befreit werden. Je nach Art der dispergierten Stoffe werden unterschiedliche Membranen verwendet. Sie bestehen aus verschiedenen Materialien und weisen charakteristische Oberflächenfunktionalisierungen und Porengrößen auf. Unabhängig von ihrer Beschaffenheit bilden sich aber mit fortschreitender Filtrationszeit auf den Oberflächen aller Membranen retentatseitig Filterkuchen und Foulingschichten aus.

Verschiedene Phänomene werden unter dem Begriff des Foulings zusammengefasst. Bei der Filtration nicht-steriler Medien kann es zum Anhaften von Mikroorganismen auf der Membranoberfläche kommen. Bakterien, Hefen, Algen, Pilze, Muscheln oder Seepocken können durch Vermehrung einen Biofilm formen, der als Biofouling bezeichnet wird. Des Weiteren kann es durch die lokale Erhöhung der Konzentration zur Präzipitation von Salzen auf der Membranoberfläche kommen.

Filterkuchen und Membranfouling führen zwangsläufig zu einem unerwünschten Anstieg des Filtrationswiderstandes. Sie müssen regelmäßig abgetragen werden, was die Effizienz der Trennverfahren senkt. Methoden, mit denen Foulingschichten schnell und vollständig entfernt werden können oder mit denen die Ausbildung von Foulingschichten retardiert werden kann, sind deshalb sehr begehrt.

Bisher bekannte Anordnungen und Verfahren zur Unterdrückung und Entfernung von Fouling in Membrantrennmodulen basieren auf dem Spülen der Membran. Hierfür können Desinfektionsmittel wie Chlor und Chloramin T, Tenside, saure oder alkalische Lösungen oder Kombinationen der vorgenannten Substanzen eingesetzt werden (Nguyen, Roddick, Fan, Biofouling of water treatment membranes: A review of the underlying causes, monitoring techniques and control measures, Membranes, 2012, 2(4), 804-840; Madaeni, Mohamambi, Mogdadam, Chemical cleaning of reverse osmosis membranes, Desalination, 2001, 134, 77-82; Zondervan, Roffel, Evaluation of different cleaning agents used for cleaning ultrafiltration membranes fouled by surface water, J. Membrane Science, 2007, 216, 67-79). Der Nachteil dabei ist, dass viele Spülmittel die Membransubstanz chemisch angreifen. Die Antifoulingwirkung kann darüber hinaus nur ungenügend gesteuert werden. Es müssen außerdem große Mengen an Chemikalien und Reagenzlösungen hergestellt und vorgehalten werden, was die Anwendung instabiler Reinigungslösungen ausschließt. Oft werden auch weitere Komponenten der Trennmodule durch die Spülmittel so stark angegriffen, dass sie auf Dauer Korrosionsprozessen unterliegen, was die Betriebsdauer der Trennmodule verkürzt und den Wartungs- und Serviceaufwand stark erhöht. Durch die nichtselektive und zu aggressive chemische Reinigung wird außerdem die Membranoberfläche angegriffen und aktiviert und die Oberflächenrauheit erhöht. Die Neigung zum Oberflächenflouling, insbesondere zum Biofouling, verstärkt sich dadurch noch.

Die Vorhaltung großer Mengen reaktiver Chemikalien kann durch externe, elektrolytische Erzeugung und Dosierung von desinfizierenden Substanzen verringert und durch Elektrolyse im Retentat- oder Feedstrom ganz vermieden werden (Knox-Holmes, Hassan, Williams, Al-Tisan, Fouling prevention in desalination plants, Second Gulf Water Conference, Bahrain, 1994, 1, 66 - 78). Ein Nachteil der Anordnungen und Verfahren aus dem Stand der Technik besteht aber in der zusätzlichen Installation einer externen Elektrolysezelle mit Zu- und Abführung und in den hohen Mindestkonzentrationen an desinfizierenden Agenzien, wie z.B. Chlor und Kupfer im Feedstrom. Um diese Mindestkonzentrationen zu erreichen und die Trennmodule foulingfrei zu halten, sind sehr hohe Elektrolyseströme, zum Beispiel größer 10 A für ein Standard-Umkehrosmosemodul notwendig. Dies setzt sehr teure und aufwendige elektrische Installationen voraus und führt zu einem unnötig hohen zusätzlichen Energieverbrauch. Solche Verfahren können auch zur Online-Erzeugung von Redoxstress, zum Beispiel über die anodische Oxidation von Chlorid und von Wasser zur Erzeugung von Chlor, Hydroxylradikalen bzw. Wasserstoffperoxid angewendet werden, was ähnlich hohe Gleichströme erfordert. Der hohe Stromverbrauch resultiert aus der Tatsache, dass die für die Unterdrückung des Biofilmwachstums notwendige Mindestkonzentration der Reagenzien im gesamten zufließenden Volumen erzeugt werden muss.

Andere Anordnungen und Verfahren beruhen auf der Ausstattung der retentatseitigen Membranoberfläche mit adsorbierten (Wilber, Pellegrino, Zydney, Benchscale testing of surfactant-modified reverse osmosis/nanofiltration membranes, Desalination, 1998, 115(1), 15-32, Xie, Yu, Wang, Zu, Improvement of antifouling characteristics in a bioreactor of polypropylene microporous membrane by the adsorption of Tween 20, J. Environmental Sciences-China, 2007, 19(12), 1461-1465), chemisorbierten (Zhou, Lü, Chen, Liu, Gao, Surface modification of thin film composite polyamide membranes by electrostatic seif deposition of polycations for improved fouling resistance, Separation and Purification Techn., 2009, 66, 287-294). und kovalent gebundenen Antifoulingschichten (Van Wagner, Sagle, Sharma, La, Freeman, Surface modification of commercial poylamide desalinatin membranes using poly(ethylene glycol) diglycidyl ether to enhance membrane fouling resistance, J. Membrane Science, 2010, 367, 273-287; US 8544658 B2; US 7677398 B2), welche die Adsorption von Biomolekülen, Makromolekülen, Mikroorganismen und anderen Organismen erschweren oder verringern. Dies kann durch chemisches Aufpfropfen oder aufpfropfende Polymerisation (Kang, Cao, Development of antifouling reverse osmosis membranes for water treatment: A review, Waters Res., 2012, 46, 584-600) von Polymerketten erfolgen. Die Polymerisation erfolgt zum Beispiel durch kontrollierte, lebende Polymerisation, wie zum Beispiel die radikalischen Atomtransferpolymerisation (ATRP) von Methacrylatmonomeren mit zwitterionischen oder sehr stark hydrophilen Seitengruppen auf vorher plasmachemisch modifizierten Membranoberflächen (WO 2016023956 A1).

Die chemische Modifizierung der Membranoberfläche läuft auf eine passive Antifoulingwirkung hinaus, die durch deren grenzflächenchemischen und - physikalischen Eigenschaften bedingt und deren Betriebsstabilität begrenzt ist. Da die in diesem Zusammenhang angewendeten Antifoulingschichten bisher nur eine begrenzte chemische Stabilität aufweisen und z.B. in Gegenwart von Oberflächen- und Meerwasser, wenn auch in günstigen Fällen nur inhibiert so doch ständig durch Mikroorganismen und anderen Organismen besiedelt werden, stellen sie keine nachhaltige Lösung dar und sind mit einer erheblichen Veränderung der Permeabilität und Selektivität der zu schützenden Trennmembran verbunden. Ein weiterer Nachteil besteht darin, dass die chemische Modifizierung der Membranoberflächen direkt in die Membranherstellung integriert werden muss, was stark erhöhte Herstellungskosten verursacht. Die Antifoulingwirkung kann deshalb immer nur für einen Biotop von Wasserorganismen eines bestimmten Wasser optimiert werden. Eine nachträgliche Anpassung und Steuerung der Antifoulingwirkung ist praktisch ausgeschlossen.

Um die Antifoulingwirkung an der retentatseitigen Oberfläche von Umkehrosmose- und Ultrafiltrationsmembranen dauerhaft aufrecht zu erhalten, universell anwendbar zu machen und optimal steuern zu können, bietet sich die Anwendung elektrisch leitender Membranen an, die als Elektrode für die Wasserelektrolyse (Duan, Dudchenko, Mende, Flyer, Zhu, Jassby, Electrochemical mineral scale prevention and removal on electrically conducting carbon nanotube - polyamide reverse osmosis membranes, Environ. Sci. Process Impacts, 2014, 16, 1300-1308; Fan, Zhao, Liu, Yu, Chen, Enhanced permeability, selectivity and antifouling ability of CNTs/A/203 membrane under electrochemical assistance, Environmental Science & Technology, 2015, 49, 2293-2300; Huang, Wang, Zhang, Thang, Ma, Wu, A novel composite conductive microfiltration membrane and its anti-fouling performance with an external electric field in membrane bioreactors, Scientific Rep., 2015, 18, 1-8) oder das Anlegen negativer oder wechselnder Potentiale (US 2015/0224450 A1) dienen können. Bisher bekannte Membranen arbeiten dann mit in einer zusätzlichen Gelschicht auf der Trennmembran dispergierten und gebundenen (De Lannoy, Jassby, Davis, Wiesner, A highly electrically conductive polymultiwalled carbon nanotube nanocomposite membrane, J. Membrane Science, 2012, 415-416, 718-724) oder in die Trennmembran einpolymerisierten, chemisch modifizierten Kohlenstoffnanoröhrchen (US 2015/0224450). Dies setzt für die Umkehrosmose und die Ultrafiltration neue, speziell zu optimierende Trennmembranen und die dazugehörigen Herstellungsverfahren voraus.

Solche Membranen sind nur mit einem im Vergleich zu herkömmlichen Membranen deutlich höheren Aufwand herstellbar. Nachteilig ist die hohe Instabilität der bisher vorgeschlagenen Kohlenstoffnanoröhrchen, die bei der Wasserelektrolyse durch elektrochemische anodische Oxidation und durch naszierendes Chlor sehr schnell abgebaut werden (Ohmori, Saito, Electrochemical durability of single-wall carbon nanotube electrode against anodic oxidation in water, Carbon,2012, 50, 4932-4938; Ito, Sun, Crooks, Electrochemical etching of individual multiwall carbon nanotubes, Electrochem. and Solid-State Lett., 2003, 6, C4-C7; Liu, Cao, Li, Xu, Zhang, The effect of electrolytic oxidation on the electrochemical properties of multi-walled carbon nanotubes, Carbon, 2006, 44, 2919-2924), was durch Verfahren, die auf dem kurzzeitigen Anlegen hoher Spannungen beruhen, nur teilweise umgangen werden kann. Die zugrunde liegenden Herstellungsverfahren führen oft auch zu einer deutlichen Verringerung der Membranperformance.

Es ist letztlich nur ein Verfahren bekannt (De Lannoy, Jassby, Davis, Wiesner, A n highly electrically conductive polymultiwalled carbon nanotube nanocomposite membrane, J. Membrane Science, 2012, 415-416, 718-724; Duan, Dudchenko, Mende, Flyer, Zhu, Jassby, Electrochemical mineral scale prevention and removal on electrically conducting carbon nanotube - polyamide reverse osmosis membranes, Environ. Sci. Process Impacts, 2014, 16, 1300-1308), bei dem die Antifoulingwirkung durch Elektrolyse an der Membranoberfläche selbst erzeugt wird. Da hierzu mit Kohlenstoffnanoröhrchen hergestellte Polyamid-CNT-Kompositmembranen angewendet werden, ist davon auszugehen, dass die bei der anodischen Polarisation im Potentialbereich zwischen + 1,5 und +2,5 V ablaufende Erzeugung von Chlor, Chloratomen und Hydroxylradikalen zu einem schnellen oxidativen Abbau der Kohlenstoffnanoröhrchen innerhalb weniger Wochen führt. Zusammen mit der Oxidation der Polyamidmatrix dürfte dies die Membranoberfläche in erheblichem Maße angreifen und schädigen. Außerdem führt die Modifizierung der Membran mit Kohlenstoffnanoröhrchen zu erheblichen Beeinträchtigungen der Membranselektivität. Die Selektivität unterschreitet einen Grenzwert von 99%, welcher jedoch für die Meerwasserentsalzung zur Trinkwassergewinnung durch Umkehrosmose erforderlich ist. Auch das Biofouling auf den Membranabstandshaltern wird nicht lange genug in ausreichendem Maße unterdrückt.

Die Aufgabe der vorliegenden Erfindung war demnach, einen Trennmodul und ein Verfahren zur Aufreinigung fluider Medien bereitzustellen, welche nicht die im Stand der Technik beschriebenen Nachteile aufweisen. Die erfindungsgemäße Aufgabe wird hinsichtlich der Vorrichtung mit dem in Patentanspruch 1 definierten Trennmodul und hinsichtlich des Verfahrens mit dem in Patentanspruch 9 dargelegten Verfahren gelöst.

Das Trennmodul zur Aufreinigung fluider Medien mit einem Behälter, mindestens einer semipermeablen Membran und mindestens einem Membranabstandshalter ist dadurch gekennzeichnet, dass der mindestens eine Membranabstandshalter als mindestens eine flächige und permeable Elektrode ausgeführt ist.

Überraschenderweise wurde festgestellt, dass eine Elektrolyse an einem die Membranen fixierenden und positionierenden Membranabstandshalter einen ausreichend hohen pH- und Redoxstress erzeugen kann, um das Trennmodul frei von mikrobiellem Bewuchs und anderem biologischen Fouling zu halten.

Dies bietet den Vorteil, dass die sehr verbreiteten und industriell vorwiegend üblichen und technisch angewandten Polymermembranen, insbesondere die sogenannten Dünnschichtkompositmembranen, in den Trennmodulen verwendet werden können. Es müssen keine Modifizierung vorgenommen und keine Einbußen in den Selektivitäten hingenommen werden.

Vorteilhafterweise ist bei dem Trennmodul außerhalb des Behälters mindestens eine externe, elektrische Spannungsquelle vorhanden und mindestens ein Pol der Spannungsquelle mit mindestens einem Membranabstandshalter verbunden.

Des Weiteren ist bevorzugt, wenn die mindestens eine semipermeable Membran und der mindestens eine Membranabstandshalter so angeordnet werden, dass der Innenraum des Behälters in mindestens zwei Kammern unterteilt wird und das Trennmodul den Aufbau eines Wickel-, Stapel- oder Plattenmoduls aufweist.

In einer bevorzugten Ausführungsform des Trennmoduls besteht der Membranabstandshalter zumindest teilweise aus einem leitfähigen Material, besonders bevorzugt aus einem Kompositmaterial aus einer polymeren Matrix und darin dispergierten elektrisch leitfähigen Partikeln ausgewählt aus der Gruppe bestehend aus Metall- und Metalllegierungspartikel, Kohlenstoffpartikel, insbesondere aus Graphit, Graphen, Kohlenstoffnanoröhrchen, Glaskohlenstoff sowie Mischungen hiervon, wobei die elektrisch leitfähigen Partikel ganz besonders bevorzugt in einem Volumenanteil von 1 bis 70 Vol.-%, insbesondere von 15 bis 60 Vol.-%, enthalten sind.

Vorteilhaft ist auch, wenn der mindestens eine Membranabstandshalter ein Gerüst aus einem elektrischen Isolator und eine zumindest bereichsweise einseitig oder beidseitig auf dem Gerüst aufgebrachte elektrisch leitfähige Beschichtung enthält.

Bevorzugt besteht der mindestens eine Membranabstandshalter aus einem perforierten Blech, einer perforierten Folie, einem Sieb, einem Netz oder einer Anordnung von Fäden, besonders bevorzugt aus einer Anordnung von Fäden in Form eines Vlieses, eines Gewebes, eines Geflechtes, eines Gewirkes oder eines Geleges, insbesondere aus einer Anordnung von Fäden, die elektrisch leitfähige und nicht elektrisch leitfähige Fäden umfassen.

Der Membranabstandshalter kann durch Flechten, Weben, Stricken, Knüpfen und Häkeln der elektrisch leitenden Fäden oder der Kombination aus elektrisch leitenden und elektrisch nichtleitenden Fäden hergestellt werden. Aus mehreren Membranen und mindestens einem Membranabstandshalter können wickelbare oder stapelbare, permeable und großflächige Elektroden oder Systeme aus mehreren Elektroden hergestellt werden. In dieser Weise ist auch die Produktion dieser Membranabstandshalter in industriellen Maßstäben gegeben.

In einer weiteren Variante der Erfindung weist der Membranabstandshalter eine Anzahl an Segmenten auf, die aus einem elektrisch leitfähigen Material bestehen, wobei die Segmente durch eine Isolatorschicht elektrisch voneinander getrennt sind und die Segmente bevorzugt paarweise als Kathode und Anode seriell oder parallel mit gegensätzlichen Polen der Spannungsquelle verbunden sind.

An jedem Segment oder jedem Abstandshalter, das oder der als Elektrode ausgebildet ist, können bei dem Betrieb des Trennmoduls zur Aufreinigung von Wasser in Abhängigkeit des pH-Wertes und des Materials der Elektrode die Reaktionen mit den Reaktionsgleichungen (I), (II),(IV) und (V) ablaufen. In Gegenwart von Chlorid laufen auch die Reaktionen (III) und (VI) ab.

Anode:

2H₂O→4H⁺+O₂+4e⁻ (I)

2OH⁻→2OH·+2e⁻→ H₂O₂ (II)

2Cl⁻ → 2Cl·+2e⁻ → Cl₂ (III)

Kathode:

2H⁺+2e⁻→H₂ (IV)

O₂ + 4H⁺+4e⁻→ 2H₂O (V)

Cl₂+2e⁻→ 2Cl⁻ (VI)

Anodisch wird der pH Wert zu niedrigen Werten zwischen 1 und 5 und kathodisch zu hohen Werten im Bereich von 9 bis 13 verschoben. Dies führt an sich schon zu einer drastischen Inhibierung des Mikroorganismenwachstums.

Durch eine intervallweise Umpolung der Elektroden beim Betrieb des Trennmoduls wird ein alternierender pH-Stress hervorgerufen. Dieser wirkt universell gegen nahezu alle Mikroorganismen und sehr viele Makroorganismen. Zusammen mit den simultan erzeugten starken Oxidationsmitteln, wie Cl₂, Cl·, OH· und H₂O₂ wird ein starker biozider Stress bestehend aus Redox- und pH-Stress erzeugt. Da die Reaktionen auf der Oberfläche der im Vergleich zur Oberfläche der Trennmembranen sehr viel stabileren Membranabstandshalter ablaufen und die hochreaktiven Zwischenprodukte auf dem Weg zur Trennmembran weitgehend abreagieren, wird die für den Trennprozess entscheidende Membran geschont.

Von Vorteil ist es, wenn die mindestens eine Membran aus einem Polymer und/oder einer Keramik, bevorzugt ausschließlich aus einem Polymermaterial, besonders bevorzugt ausschließlich aus einem elektrisch isolierenden Polymermaterial mit einer maximalen spezifischen Leitfähigkeit von 10⁻⁶S·cm⁻¹, insbesondere aus Cellulose, Cellulosederivaten, Polyamiden, Polyharnstoffen, Polyurethanen, Polyfuranen, Polycarbonaten und/oder Mischungen hiervon, besteht.

Bei dem Verfahren zur Aufreinigung fluider Medien wird dem zuvor beschriebenen Trennmodul ein fluides Medium zugeführt, das darin dispergierte, unerwünschte Inhalte umfasst, welche in schwerlöslichen Salzen und/oder Mikroorganismen bestehen, und die Inhalte mittels mindestens einer Membran vom Fluid getrennt werden, wobei eine Ablagerung der Inhalte auf der mindestens einen Membran durch elektrolytische Reaktionen an dem mindestens einen Membranabstandshalter verringert wird.

Im Vergleich zu den bekannten Verfahren ist es wesentlich vorteilhafter, pH und Redoxstress elektrochemisch durch elektrolytische Wasserelektrolyse in der Nähe der retentatseitigen Membranoberfläche auf dem Membranabstandshalter und nicht auf den dafür zu empfindlichen Membranoberflächen zu erzeugen. Dies ermöglicht es außerdem, die Membranabstandshalter und die Membranen unabhängig voneinander zu optimieren.

Das Verfahren zur Aufreinigung kann kontinuierlich oder diskontinuierlich durchgeführt werden.

Als zu reinigendes fluides Medium kann in dem Verfahren verunreinigtes Süßwasser, Brackwasser oder Salzwasser, insbesondere Seewasser, verwendet werden, wobei die Verunreinigung bevorzugt in einer Verunreinigung durch Mikro- und Makroorganismen besteht.

Verfahren nach einem der Ansprüche 9 oder 10, dadurch gekennzeichnet, dass eine elektrische Spannung von 0,1 bis 42 V, bevorzugt von 1,5 bis 4,0 V, zwischen den Membranabstandshaltern oder zwischen Segmenten des mindestens einen Membranabstandshalters angelegt wird, wobei die Spannung bevorzugt während des gesamten Verfahrens, innerhalb definierter Zeitintervalle oder innerhalb kurzer Pulse anliegt und konstant gehalten oder während des Verfahrens variiert wird.

Verwendung findet das zuvor beschriebene Trennmodul bei der Aufreinigung fluider Medien, insbesondere Süß- und Seewasser, nach dem Prinzip der Umkehrosmose, der Nano-, Ultra- und/oder Mikrofiltration unter Verringerung von Fouling, bevorzugt durch Unterdrückung von Biofouling, Membranzusetzung, und/oder der Ausfällung schwer löslicher Salze, besonders bevorzugt unter Vermeidung der Adhäsion und des Wachstums von Mikroorganismen, insbesondere Muscheln und immobilisierenden Krebsen, der Ausfällung schwerlöslicher Salze, insbesondere Calcium-, Magnesiumcarbonat und/oder weiterer Carbonate.

Anhand der nachfolgenden Figuren soll das erfindungsgemäße Trennmodul näher erläutert werden, ohne dieses jedoch auf die dargestellten spezifischen Ausführungsformen einschränken zu wollen.

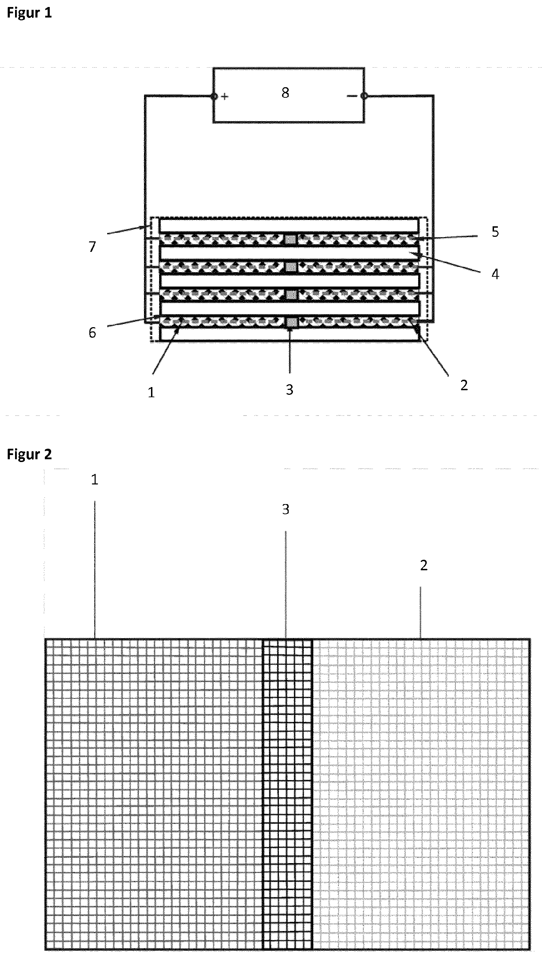

Figur 1 zeigt eine Anordnung für das gesteuerte Antifouling in Trennmodulen für die Umkehrosmose und die Ultrafiltration über polymere Membranen. In dem Trennmodul (7) sind die als Anode (1) bzw. als Kathode (2) geschalteten Abstandshaltersegmente der Trennmembranen (6) durch Isolatorsegmente (3) voneinander getrennt und über Stromzuführungen und Stromabführungen mit einer Gleichstromquelle (8) verbunden. Auf der ersten Seite der Trennmembranen (6) kann in dieser Weise das Retentat (5) zurückgehalten werden, während das Permeat (4) die Trennmembranen (6) passieren kann. Das Elektrodensystem für das elektrochemische Antifouling durch Wasserelektrolyse befindet sich in den Retentatkanälen entsprechender Trennmodule (7).

Figur 2 zeigt einen segmentierten Membranabstandshalter aus elektrisch leitfähigen Gewebesegmenten, der Anode (1) und der Kathode (2), und einem elektrisch isolierenden Gewebe bzw. Isolatorsegment (3), das eingetaucht in Meerwasser und fixiert in den Retentat- oder Permeatkanälen als komplettes Elektrodenpaar für die Wasserelektrolyse geschaltet werden kann. Die elektrisch leitfähigen Gewebesegmente bestehen aus Fäden, die z.B. durch Extrusion eines Polyethylen-co-propylen-Graphit-Komposites hergestellt worden sind. Die elektrisch leitfähigen Fäden können aber auch aus Kohlenfasern, oder Kupferdrähten bestehen, die mit einem Graphit-Poylharnstoff-Komposit-Lack beschichtet worden sind. Das elektrisch isolierende Gewebe bzw. Isolatorsegment (3) besteht aus Polyethylen-co-propylen, Polyamiden, anderen Polymerfäden oder in weiteren Beispielen aus Glasfasern.

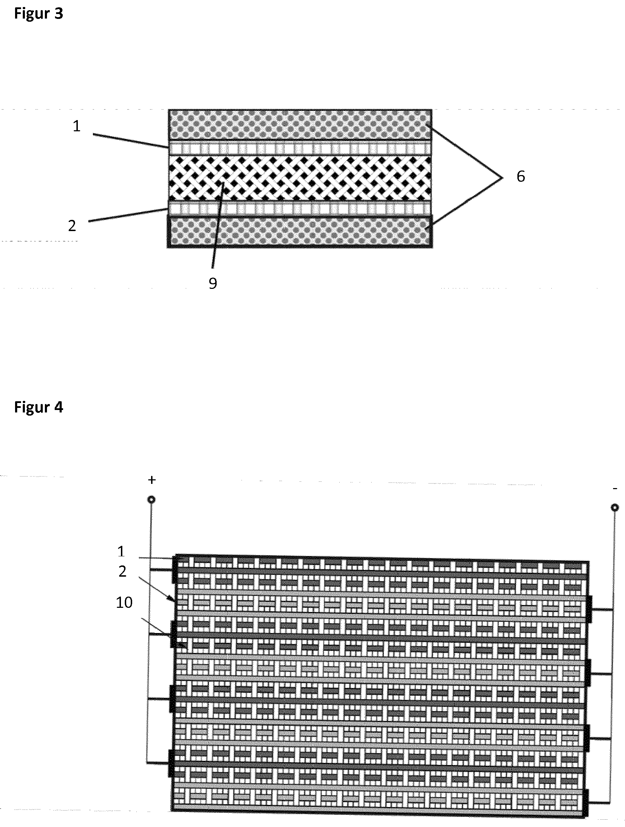

Figur 3 zeigt einen als Abstandshalter für eine Ultrafiltrations-Trennmembran (6), der als Kombination aus Elektrode und poröser Diaphragmafolie (9) ausgestaltet ist. Die Vorder- und Rückseite kann alternierend als Anode (1) bzw. Kathode (2) geschaltet werden. Die Kontaktierung erfolgt über den Außenmantel von Membranwickelmodulen oder bei Stapelmodulen über die Randdichtungen.

Figur 4 zeigt eine geflochtene Struktur für Membranabstandshalter mit alternierend angeordneten anodisch (1) und kathodisch (2) geschaltenen Fäden und isolierenden Fäden (10) aus einem Kohlenstoff-Polymer-Komposit oder inerten Metallfäden.

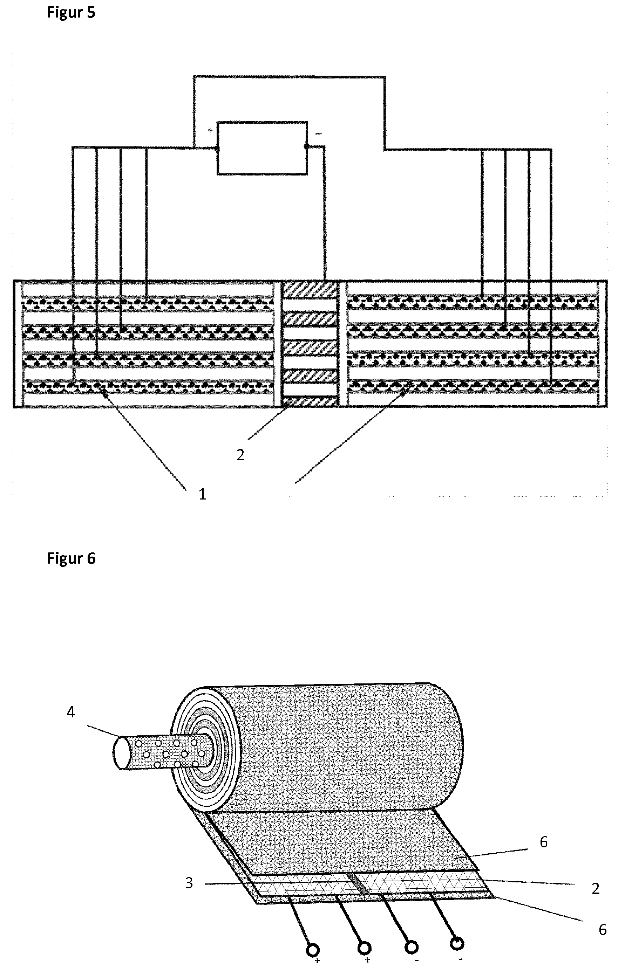

Figur 5 zeigt ein Trennmodul mit einer als Stirntrennplatte ausgeführten Gegenelektrode (2) für die Umkehrosmose oder die Ultrafiltration. Die Membranabstandshalter (1) werden als Elektroden geschaltet, wobei der Stromkreis über die Stirntrennplatte geschlossen wird.

Figur 6 zeigt ein Trennmodul, das als Membranwickelmodul ausgeführt ist und einen Abstandshalter für die Trennmembranen (6) beinhaltet, der elektrisch leitende Segmente (2) aufweist, die voneinander durch nichtleitende Segmente bzw. Isolatorsegmente (3), isoliert sind. Das Permeat (4) befindet sich in dem inneren Hohlraum des Wickelmoduls.

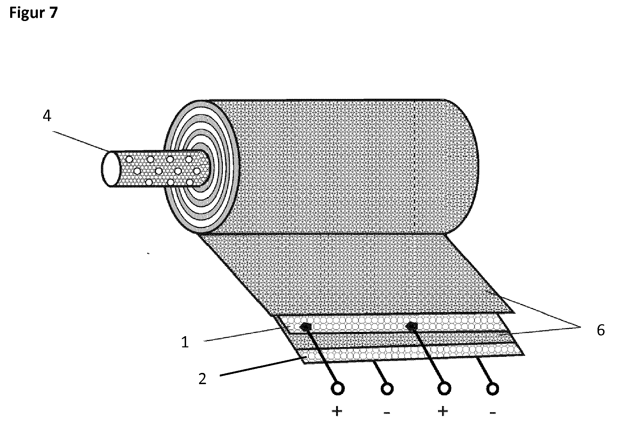

Figur 7 zeigt die Ausführung des Trennmoduls als Wickelmodul mit nichtsegmentierten, elektrisch leitenden Abstandhalten (1) und (2) für die Trennmembranen (6), wobei die Membranabstandshalter entweder als Anode (1) oder als Kathode (2) geschaltet und über den Modulmantel kontaktiert werden können. Das Permeat (4) befindet sich auch hier im Inneren des Wickelmoduls.

## Patentansprüche

1. Trennmodul zur Aufreinigung fluider Medien mit einem Behälter, mindestens einer semipermeablen Membran und mindestens einem Membranabstandshalter, **dadurch gekennzeichnet, dass**
der mindestens eine Membranabstandshalter als mindestens eine flächige und permeable Elektrode ausgeführt ist.

2. Trennmodul nach Anspruch 1, **dadurch gekennzeichnet, dass** außerhalb des Behälters mindestens eine externe, elektrische Spannungsquelle vorhanden ist, wobei mindestens ein Pol der Spannungsquelle mit mindestens einem Membranabstandshalter verbunden ist.

3. Trennmodul nach einem der vorhergehenden Ansprüche, **dadurch gekennzeichnet, dass**
die mindestens eine semipermeable Membran und der mindestens eine Membranabstandshalter so angeordnet werden, dass der Innenraum des Behälters in mindestens zwei Kammern unterteilt wird,
wobei das Trennmodul den Aufbau eines Wickel-, Stapel- oder Plattenmoduls aufweist.

4. Trennmodul nach einem dem vorhergehenden Ansprüche, **dadurch gekennzeichnet, dass** der Membranabstandshalter zumindest teilweise aus einem leitfähigen Material besteht, bevorzugt aus einem Kompositmaterial aus einer polymeren Matrix und darin dispergierten elektrisch leitfähigen Partikeln, ausgewählt aus der Gruppe bestehend aus Metall- und Metalllegierungspartikel, Kohlenstoffpartikel, insbesondere aus Graphit, Graphen, Kohlenstoffnanoröhrchen, Glaskohlenstoff sowie Mischungen hiervon, wobei die elektrisch leitfähigen Partikel besonders bevorzugt in einem Volumenanteil von 1 bis 70 Vol.-%, ganz besonders bevorzugt von 15 bis 60 Vol.-%, enthalten sind.

5. Trennmodul nach einem der vorhergehenden Ansprüche, **dadurch gekennzeichnet, dass** der mindestens eine Membranabstandshalter ein Gerüst aus einem elektrischen Isolator und eine zumindest bereichsweise einseitig oder beidseitig auf dem Gerüst aufgebrachte elektrisch leitfähige Beschichtung enthält.

6. Trennmodul nach einem der vorhergehenden Ansprüche, **dadurch gekennzeichnet, dass** der mindestens eine Membranabstandshalter aus einem perforierten Blech, einer perforierten Folie, einem Sieb, einem Netz oder einer Anordnung von Fäden besteht, bevorzugt aus einer Anordnung von Fäden in Form eines Vlieses, eines Gewebes, eines Geflechtes, eines Gewirkes oder eines Geleges, besonders bevorzugt aus einer Anordnung von Fäden, die elektrisch leitfähige und nicht elektrisch leitfähige Fäden umfassen.

7. Trennmodul nach einem dem vorhergehenden Ansprüche, **dadurch gekennzeichnet, dass** der mindestens eine Membranabstandshalter eine Anzahl an Segmenten aufweist, die aus einem elektrisch leitfähigen Material bestehen, wobei die Segmente durch eine Isolatorschicht elektrisch voneinander getrennt sind und die Segmente bevorzugt paarweise als Kathode und Anode seriell oder parallel mit gegensätzlichen Polen der Spannungsquelle verbunden sind.

8. Trennmodul nach einem der vorhergehenden Ansprüche, **dadurch gekennzeichnet, dass** die mindestens eine Membran aus
einem Polymer und/oder einer Keramik,
bevorzugt ausschließlich aus einem Polymermaterial,
besonders bevorzugt ausschließlich aus einem elektrisch isolierenden Polymermaterial mit einer maximalen spezifischen Leitfähigkeit von 10⁻⁶ S·cm⁻¹,
insbesondere aus Cellulose, Cellulosederivaten, Polyamiden, Polyharnstoffen, Polyurethanen, Polyfuranen, Polycarbonaten und/oder Mischungen hiervon,
besteht

9. Verfahren zur Aufreinigung fluider Medien, bei dem einem Trennmodul nach einem der Ansprüche 1 bis 8 ein fluides Medium zugeführt wird, das darin dispergierte, unerwünschte Inhalte umfasst, welche in schwerlöslichen Salzen und/oder Mikroorganismen bestehen, und die Inhalte mittels mindestens einer Membran vom Fluid getrennt werden, wobei eine Ablagerung der Inhalte auf der mindestens einen Membran durch elektrolytische Reaktionen an dem mindestens einen Membranabstandshalter verringert wird.

10. Verfahren nach einem der Ansprüche 9 bis 11, **dadurch gekennzeichnet, dass** das Verfahren kontinuierlich oder diskontinuierlich durchgeführt werden kann.

11. Verfahren nach Anspruch 9, **dadurch gekennzeichnet, dass** das zu reinigende fluide Medium Wasser, bevorzugt verunreinigtes Süßwasser, Brackwasser oder Salzwasser, insbesondere Seewasser, ist, wobei die Verunreinigung bevorzugt in einer Verunreinigung durch Mikro- und Makroorganismen besteht.

12. Verfahren nach einem der Ansprüche 9 oder 10, **dadurch gekennzeichnet, dass** eine elektrische Spannung von 0,1 bis 42 V, bevorzugt von 1,5 bis 4,0 V, zwischen den Membranabstandshaltern oder zwischen Segmenten des mindestens einen Membranabstandshalters angelegt wird, wobei die Spannung bevorzugt während des gesamten Verfahrens, innerhalb definierter Zeitintervalle oder innerhalb kurzer Pulse anliegt und konstant gehalten oder während des Verfahrens variiert wird.

13. Verwendung eines Trennmoduls nach einem der Ansprüche 9 bis 12 für die Aufreinigung fluider Medien, insbesondere Süß- und Seewasser, nach dem Prinzip der Umkehrosmose, der Nano-, Ultra- und/oder Mikrofiltration unter Verringerung von Fouling, bevorzugt durch Unterdrückung von Biofouling, Membranzusetzung, und/oder der Ausfällung schwer löslicher Salze, besonders bevorzugt unter Vermeidung der Adhäsion und des Wachstums von Mikroorganismen, insbesondere Muscheln und immobilisierenden Krebsen, der Ausfällung schwerlöslicher Salze, insbesondere Calcium-, Magnesiumcarbonat und/oder weiterer Carbonate.
